# EUROPÄISCHE PATENTSCHRIFT

(11) **EP 0 653 990 B1**
(45) Veröffentlichungstag und Bekanntmachung des Hinweises auf die Patenterteilung: **29.01.1997**
(21) Anmeldenummer: 93915656.8
(22) Anmeldetag: 23.07.1993
(51) Int. Cl.: B60H 1/00, F01P 7/14

(54) **TAKTVENTIL ZUR DISKONTINUIERLICHEN DOSIERUNG EINES VOLUMENSTROMS**
TIMING VALVE FOR THE DISCONTINUOUS METERING OF A VOLUME FLOW
SOUPAPE A IMPULSIONS CADENCEES POUR DOSER UN FLUX VOLUMIQUE DE MANIERE DISCONTINUE

(30) Priorität: 11.08.1992 DE 4226531
(43) Veröffentlichungstag der Anmeldung: 24.05.1995
(73) Patentinhaber: ROBERT BOSCH GMBH, 70442 Stuttgart (DE)
(72) Erfinder: ROTH, Wolfgang, D-86199 Augsburg (DE); PFETZER, Johannes, D-77815 Bühl (DE)
(86) Internationale Anmeldenummer: DE9300650
(87) Internationale Veröffentlichungsnummer: WO9404382

(56) Entgegenhaltungen:
- FR-A- 990 664
- FR-A- 2 359 717
- US-A- 4 726 325
- PATENT ABSTRACTS OF JAPAN vol. 9, no. 191 (M-402)7. August 1985; & JP-A-60 056 624 (TAIHEIYOU) 2. April 1985
- PATENT ABSTRACTS OF JAPAN vol. 9, no. 214 (P-384)29. September 1983; & JP-A-60 073 714 (HITACHI SEISAKUSHO) 25. April 1985

## Beschreibung

### Stand der Technik

Die Erfindung geht aus von einem Taktventil zur diskontinuierlichen Dosierung eines Volumenstroms, insbesondere des durch einen Wärmetauscher einer Kraftfahrzeugheizung fließenden Kühlwasserstroms des Kraftfahrzeugmotors, der im Oberbegriff des Anspruchs 1 definierten Gattung.

Ein bekanntes Taktventil zur Dosierung der Durchflußmenge des Heiz- oder Kühlwassers durch den Wärmetauscher einer Kraftfahrzeugheizung und damit zur Einstellung der Heizleistung ist als magnetisch betätigtes 2/2-Wegeventil ausgebildet,das in dem über den Fahrzeugkühler führenden Kühlwasserkreislauf des Verbrennungsmotors zwischen dem Motor und dem Wärmetauscher eingeschaltet ist. Zwischen dem Eingang des 2/2-Wegeventils und dem Ausgang des Wärmetauschers ist ein Überströmventil angeordnet, das bei geschlossenem 2/2-Wegeventil den Kühlwasserstrom unter Umgehung des Wärmetauschers direkt zu dem Eingang des Kühlers leitet. Da die im Kühlwasserkreislauf zwischen Kühler und Verbrennungsmotor angeordnete Kühlwasserpumpe direkt vom Motor angetrieben wird, wird der Wärmetauscher in der Öffnungsphase des Taktventils von einem sehr unterschiedlichen Heizwasservolumenstrom durchflossen, je nachdem, ob der Motor gerade im Leerlauf oder Teil- oder Vollastbetrieb arbeitet. Um eine konstante Heizleistung des Wärmetauschers sicherzustellen, müssen daher die Taktzeiten des Taktventils auch an das Kühl- bzw. Heizwasserangebot angepaßt werden.

### Vorteile der Erfindung

Das erfindungsgemäße Taktventil mit den kennzeichnenden Merkmalen des Anspruchs 1 hat demgegenüber den Vorteil, daß am Ablauf des Taktventils unabhängig von dem am Zulauf des Taktventils angebotenen Volumenstrom stets ein konstanter Volumenstrom abgenommen wird. Für die Heizungsanlage eines Kraftfahrzeugs bedeutet dies, daß der Wärmetauscher stets von einem konstanten Heizwasserstrom durchflossen wird, unabhängig von dem jeweiligen Betriebszustand des Motors. Im Motorleerlaufbetrieb, d.h. bei niedriger Leistung der Kühlwasserpumpe und geringem Kühlwasserstrom am Zulauf des Taktventils, wird der Wärmetauscher bei geöffnetem Ventilglied mit der vollen zur Verfügung stehenden Heizwassermenge durchströmt. Im Motorteillast- und - vollastbetrieb wird der Wärmetauscher von einem nahezu konstanten Teil des von der Kühlwasserpumpe umgewälzten Kühlwasserstroms durchströmt. Der Restvolumenstrom fließt über den Bypaßkanal in den Rücklauf.

Mit einem solchermaßen ausgebildeten Taktventil müssen die Taktzeiten nur entsprechend der gewünschten Heiztemperatur eingestellt werden und brauchen nicht auch noch zusätzlich ständig in Abhängigkeit von der momentanen Betriebsweise des Motors korrigiert zu werden. Dies vereinfacht die Regelung der Taktzeiten des Taktventils, durch die die Heizwasserbeaufschlagung des Wärmetauschers gesteuert wird, wesentlich. Bei einer vorgewählten Temperatur kann damit die Taktzeit weitgehend konstant gehalten werden, und ein Eingriff in das Taktzeitenverhältnis ist lediglich bei Veränderung der gewünschten Heiztemperatur erforderlich.

Durch die in den weiteren Ansprüchen aufgeführten Maßnahmen sind vorteilhafte Weiterbildungen und Verbesserungen des im Anspruch 1 angegebenen Taktventils möglich.

Die Konstanz des am Ablauf abnehmbaren Volumenstroms wird in einer bevorzugten Ausführungsform der Erfindung konstruktiv dadurch erreicht, daß das Bypaßventil einen im Bypaßkanal ausgebildeten Ventilsitz und einen durch eine Schließfeder auf den Ventilsitz aufgesetzten Steuerkegel aufweist. Das Ventilglied des Taktventils sitzt dabei fest, der Steuerkegel axial verschieblich auf einer von einem Elektromagneten betätigten Ventilstange, wobei sich der Steuerkegel unter der Wirkung der Schließfeder an einer Ringschulter an der Ventilstange abstützt. Die Schließkraft der Schließfeder und der Kegelwinkel des vom Druck im Bypaßkanal beaufschlagten Steuerkegels sind so aufeinander abgestimmt, daß der Ausströmquerschnitt des Bypaßventils mit zunehmenden Volumenstrom am Zulauf abhängig vom Druck und der Strömungsgeschwindigkeit im Bypaßkanal so weit aufgestoßen wird, daß ein den konstanten Volumenstrom am Ablauf übersteigender Restvolumenstrom direkt zum Rücklauf abfließt.

Gemäß einer bevorzugten Ausführungsform der Erfindung wird zum Steuern der Verbindung zwischen Zu- und Ablauf ein Sitzventil verwendet, in welchem das auf der Ventilstange fest sitzende Ventilglied kegelstumpfförmig ausgebildet und der Ventilsitz koaxial zum Ventilsitz des Bypaßventils am Ventilgehäuse angeordnet ist.

### Zeichnung

Die Erfindung ist anhand eines in der Zeichnung dargestellten Ausführungsbeispiels in der nachfolgenden Beschreibung näher erläutert. Es zeigen:
- Fig. 1: ein Blockschaltbild einer Heizungsanlage für ein Kraftfahrzeug mit einem im Längsschnitt schematisch dargestellten Taktventil,
- Fig. 2 bis 4: jeweils einen Längsschnitt eines Taktventils gemäß einem weiteren Ausführungsbeispiel in drei verschiedenen Schaltzuständen.

### Beschreibung des Ausführungsbeispiels

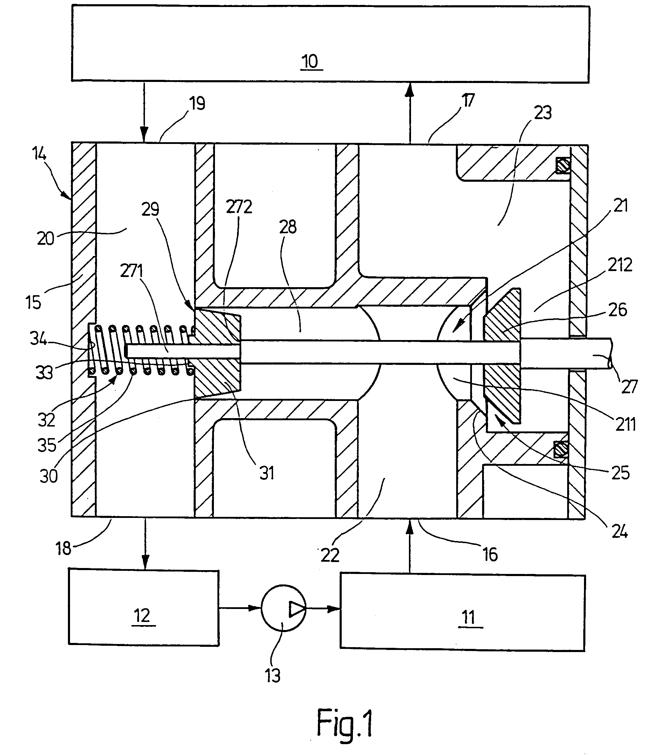

Bei der in Fig. 1 im Blockschaltbild dargestellten Heizungsanlage für ein Kraftfahrzeug ist mit 10 ein Wärmetauscher gekennzeichnet, der im Kühlwasserkreislauf des Motors des Kraftfahrzeugs angeordnet ist. Der Wärmetauscher 10 wird von Luft durchströmt, die den Fahrzeuginnenraum zu dessen Erwärmen zugeleitet wird. Mit 11 ist der Verbrennungsmotor, mit 12 der Kühler des Motors 11 und mit 13 die Kühlwasserpumpe bezeichnet. Im Kühlkreislauf ist zwischen Motor 11 und Wärmetauscher 10 ein Taktventil 14 eingeschaltet. Bei geöffnetem Taktventil 14 fließt das von der Kühlwasserpumpe 13 umgewälzte Kühlwasser, das im Motor 11 aufgeheizt ist, von diesem über das Taktventil 14, durchströmt dort als Heizwasser den Wärmetauscher 10 und gelangt wieder über das Taktventil 14 zu dem Kühler 12, wo es durch den den Kühler 12 durchströmenden Fahrtwind abgekühlt wird, und von dort zurück zur Kühlwasserpumpe 13.

Das in der Zeichnung im Längsschnitt schematisch dargestellte Taktventil 14 weist ein Ventilgehäuse 15 mit einem Zulauf 16, einem Ablauf 11 und einem Rücklauf 18 sowie einen weiteren Anschluß 19 auf. Der Zulauf 16 ist mit dem Motor 11, der Ablauf 17 mit dem Eingang des Wärmetauschers 10, der weitere Anschluß 19 mit dem Ausgang des Wärmetauschers 10 und der Rücklauf 18 mit dem Kühler 12 verbunden. Im Ventilgehäuse 15 sind ein Rücklaufkanal 20 und eine Ventilkammer 21 ausgebildet. Der Rücklaufkanal 20 verbindet auf direktem Weg den weiteren Anschluß 19 mit dem Rücklauf 18, während die Ventilkammer 21 über einen Zulaufkanal 22 mit dem Zulauf 16 und über einen Ablaufkanal 23 mit dem Ablauf 17 in Verbindung steht. Durch einen am Ventilgehäuse 10 ausgebildeten kegelstumpfförmigen Ventilsitz 24 ist die Ventilkammer 21 in zwei Kammerabschnitte 211 und 212 unterteilt, von welchen der Kammerabschnitt 211 in den Zulaufkanal 22 und der Kammerabschnitt 212 in den Ablaufkanal 23 übergeht. Der Ventilsitz 24 ist Teil eines Sitzventils 25, dessen mit dem Ventilsitz 24 zusammenwirkendes, kegelstumpfförmiges Ventilglied 26 fest auf einer Ventilstange 27 sitzt. Die Ventilstange 27 wird von einem in Fig. 1 nicht dargestellten Elektromagneten angetrieben, der in einer von zwei Schaltstellungen das Ventilglied 26 vom Ventilsitz 24 abhebt, somit das Sitzventil 25 öffnet, und in der anderen Schaltstellung das Ventilglied 26 auf den Ventilsitz 24 aufsetzt und damit das Sitzventil 25 schließt.

Der mit dem Zulaufkanal 22 verbundene Kammerabschnitt 211 ist über einen Bypaßkanal 28 mit dem Rücklaufkanal 20 verbunden. Der Bypaßkanal 28 ist dabei koaxial zum Ventilsitz 24 des Sitzventils 25 angeordnet. Die Mündung des Bypaßkanals 28 im Rücklaufkanal 20 ist mit einem Bypaßventil 29 verschlossen. Das Bypaßventil 29 weist einen an der Mündung des Bypaßkanals 28 angeordneten Steuerkegel 31 auf, der von einer Schließfeder 32 in Schließstellung gehalten wird, in welcher die Kanalmündung ganz oder bis auf einen vernachlässigbaren Ringspalt 30 geschlossen ist. Die vom Druck im Bypaß 28 beaufschlagte Fläche des Steuerkegels 31 ist kegelstumpfförmig ausgebildet. Die Schließfeder 32 ist hier als Schraubendruckfeder 35 ausgeführt und stützt sich einerseits unter Übergreifen eines Führungszapfens 33 am Steuerkegel 31 und andererseits gehäuseseitig in einer Führungsnut 34 in der dem Steuerkegel 31 gegenüberliegenden Gehäusewand im Rücklaufkanal 20 ab. Der Steuerkegel 31 sitzt axial verschieblich auf der Ventilstange 27, die durch den Bypaßkanal 28 bis in den Rücklaufkanal 20 hindurchgeführt ist. Der den Steuerkegel 31 aufnehmende Endabschnitt 271 der Ventilstange 27 ist im Durchmesser reduziert, so daß eine Ringschulter 272 entsteht, an die der Steuerkegel 31 durch die Druckfeder 35 angelegt wird.

In der in der Zeichnung dargestellten Offenstellung des Taktventils 14 ist das Sitzventil 25 geöffnet und das Bypaßventil 29 geschlossen. Wird das Taktventil 14 umgeschaltet, so wird die Ventilstange 27 durch den Elektromagneten in ihre andere Schaltstellung umgesteuert, in welcher das Ventilglied 26 des Sitzventils 25 auf den Ventilsitz 24 zum Schließen des Sitzventils 25 aufgesetzt und gleichzeitig der Steuerkegel 31 über die Ringschulter 272 gegen die Kraft der Druckfeder 35 soweit verschoben wird, daß der an der Bypaßkanalmündung vom Steuerkegel 31 freigegebene Ringspalt 30 maximal ist. Das von dem Motor 11 über den Zulauf 16 in das Taktventil 14 einströmende Kühlwasser wird in diesem Fall über das geöffnete Bypaßventil 29 direkt zum Kühler 12 geleitet. Der Wärmetauscher 10 ist abgeschaltet, die Heizung des Kraftfahrzeugs abgestellt.

Im Heizbetrieb nimmt das Taktventil 14 die in der Zeichnung dargestellte Stellung ein, in welcher das von dem Motor 11 kommende Kühlwasser 13 über das geöffnete Sitzventil 25 in den Wärmetauscher 10 geleitet wird und von dort über den Anschluß 19, den Rücklaufkanal 20 und den Rücklauf 18 im Taktventil 14 zum Kühler 12 fließt. Um eine gewünschte Heizleistung einstellen zu können, wird der Elektromagnet des Taktventils 14 mit Erregerimpulsen belegt, so daß das Sitzventil 25 und das Bypaßventil 29 gegensinnig in einem bestimmten Takt geöffnet und geschlossen werden. Dadurch wird eine diskontinuierliche Dosierung des den Wärmetauscher 10 durchströmenden Heizwassers erreicht und somit eine mittlere Temperatur des Wärmetauschers 10 eingestellt.

Bekanntermaßen fällt durch die vom Motor 11 direkt angetriebene Kühlwasserpumpe 13 am Zulauf 16 des Taktventils 14 ein sehr unterschiedlicher Kühlwasserstrom an, je nachdem, ob der Motor im Leerlauf läuft oder im Teil- oder Vollastbetrieb arbeitet. Bei geringem Kühlwasserangebot (Leerlauf) fließt die volle Wassermenge durch das geöffnete Sitzventil 25 in den Wärmetauscher 10. Aufgrund des geringen Staudrucks in der Ventilkammer 21 und damit im Bypaßkanal 28 bleibt der federbelastete Steuerkegel 31 des Bypaßventils 29 in seiner den Bypaßkanal 28 absperrenden Schließstellung.

Bei hohem Kühlwasserangebot am Zulauf 16 (Teillast- oder Vollastbetrieb) fließt ein Teil des Kühlwassers über das geöffnete Sitzventil 25 zum Ablauf 17 des Taktventils 14 und zu dem Wärmetauscher 10. Bedingt durch die erhöhten Druckabfälle im Wärmetauscher 10 und im Taktventil 14 baut sich im Bypaßkanal 28 ein solcher Druck auf, daß der federbelastete Steuerkegel 31 gegen die Kraft der Schließfeder 32 vom Ventilsitz 30 abhebt und somit den Bypaßkanal 28 öffnet. Ein Teilstrom des Kühlwassers fließt nunmehr direkt über den Bypaßkanal 28 zum Rücklauf 18. Der Kegelwinkel der Druckbeaufschlagungsfläche des kegelstumpfförmigen Steuerkegels 31 und die Rückstellkraft der Schließfeder 32 sind nunmehr so aufeinander abgestimmt, daß bei geöffnetem Sitzventil 25 immer ein konstanter Volumenstrom über das Sitzventil 25 zu dem Ablauf 17 fließt und der verbleibende Restvolumenstrom durch den Bypaßkanal 28 abfließt. Eine solche Einstellung des Bypaßventils 29 ist ohne weiteres möglich, da die Stellung des Steuerkegels 31 und damit der sich daraus ergebende freigegebene Ausströmquerschnitt des Bypaßventils 29 abhängig vom Druck und der Strömungsgeschwindigkeit im Bypaßkanal 28 sind.

Dieses vorstehend beschriebene Konstanthalten des über das Sitzventil 25 zu dem Wärmetauscher 10 strömenden Volumenstroms durch den abhängig vom Druck im Bypaßkanal 28 sich verändernden Ausströmquerschnitt des Ringspalts 30 am Bypaßventil 29 hat den Vorteil, daß der Wärmetauscher 10 unabhängig von der Betriebsweise des Motors immer mit einem konstanten Heizwasservolumen beaufschlagt wird. Zur Einstellung der Heizleistung des Wärmetauschers 10 kann daher das Taktventil 14 mit nahezu konstanten Taktzeiten betrieben werden, die nicht noch zusätzlich entsprechend dem momentanen Heizwasserangebot am Zulauf 16 des Taktventils 14 variiert werden müssen. Lediglich bei Veränderung der gewünschten Heizleistung müssen die Taktzeiten des Taktventils 14 neu festgelegt werden.

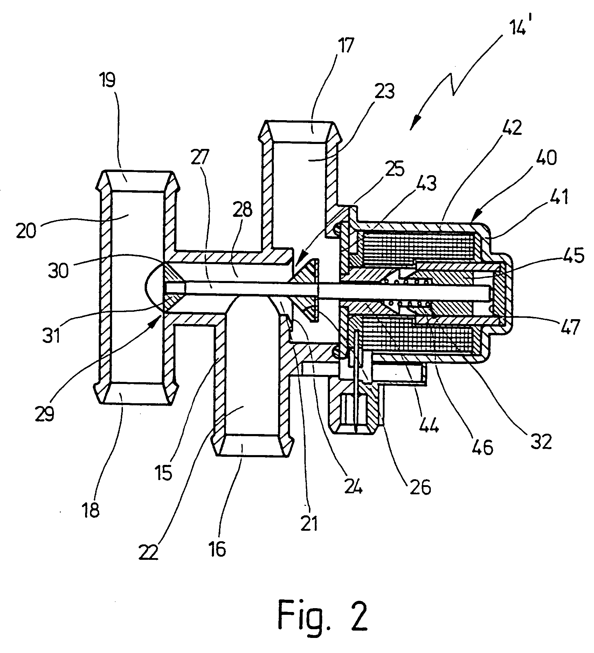

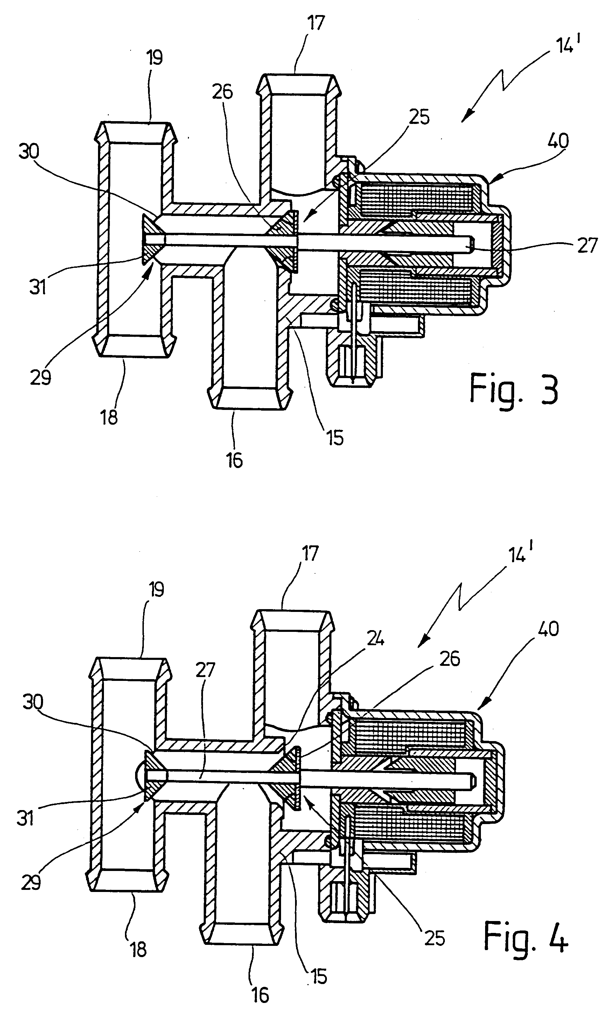

Das in Fig. 2 im Längsschnitt dargestellte Taktvenitl 14' gemäß einem weiteren Ausführungsbeispiel ist gegenüber dem zuvor beschriebenen Taktventil 14 nur hinsichtlich des Bypaßventils 29 modifiziert. Soweit Bauteile des Taktventils 14' in Fig. 2 mit denen in Fig. 1 übereinstimmen, sind sie mit gleichen Bezugszeichen versehen. Der Steuerkegel 31 des Bypaßventils 29 ist hier starr auf der Ventilstange 27 befestigt. Der hier im Schnitt dargestellte Elektromagnet 40 bekannter Bauart weist einen an das Ventilgehäuse angeflanschten Magnettopf 41 auf, in dem eine ringförmige Erregerspule 42 aufgenommen ist. Der Magnettopf 41 ist von einem scheibenförmigen Rückschlußjoch 43 abgeschlossen, von dem ein Magnetkern 44 zentral absteht und in das Innere der Erregerspule 42 hineinragt. Der Magnetkern 44 umschließt die Ventilstange 27 mit Spiel. Im Innern der Erregerspule 42 ist ein zylinderförmiger Anker 45 fest mit der Ventilstange 27 verbunden. Zwischen dem Anker 45 und dem Magnetkern 44 stützt sich eine Rückstellfeder 46 ab, die bei unbestromter Erregerspule 42 die Ventilstange 27 gegen einen Anschlag 47 am Magnettopf 41 drückt. Das Ventilglied 26 des Sitzventils 25 ist auf der Ventilstange 27 wiederum unverschieblich derart befestigt, daß in dieser Grundstellung der Ventilstange 27 das Ventilglied 26 maximal vom Ventilsitz 24 abgehoben, also das Sitzventil 25 vollständig geöffnet ist. Der ebenfalls unverschieblich auf der Ventilstange 27 befestigte Steuerkegel 31 des Bypaßventils 29 ist in einem solchen Abstand zum Ventilglied 26 angeordnet, daß er in dieser Grundstellung der Ventilstange 27 die Mündung des Bypaßkanals 28 vollständig oder bis auf den vernachlässigbaren Ringspalt 30 verschließt. Die Rückstellfeder 46 bildet damit zugleich die Schließfeder 32 des Bypaßventils 29. Bei bestromter Erregerspule wird der Anker 45 vom Magnetkern 44 gegen die Kraft der Rückstellfeder 46 angezogen und schiebt dabei über die Ventilstange 27 das Ventilglied 26 des Sitzventils 25 auf den Ventilsitz 24. Das Sitzventil 25 ist damit geschlossen. Mit der Ventilstange 27 verschiebt sich auch der Steuerkegel 31 und gibt am Ausgang des Bypaßkanals 28 den Ringspalt 30 mit maximalem Austrittsquerschnitt frei (Fig. 3).

Bei stromlosem Elektromagneten 40 nimmt die Ventilstange 27 bei geringem Kühlwasserangebot am Zulauf 16 die in Fig. 2 dargestellte Stellung ein. Das gesamte Kühlwasser fließt über das voll geöffnete Sitzventil 25 zum Ablauf 17. Bei hohem Kühlwasserangebot am Zulauf 16 fließt ein Teil des Volumenstroms durch das geöffnete Sitzventil 25. Bedingt durch den sich ergebenden Staudruck im Bypaßkanal 28 die Auslegung der Rückstellfeder 46 und des Kegelwinkels der Druckbeaufschlagungsfläche des Steuerkegels 31 fließt ein weiterer Teilstrom des Volumenstroms durch den sich stärker öffnenden Ringspalt 30 des Bypaßventils 29. Dieser Zustand des Taktventils 14' ist in Fig. 4 dargestellt. Auch hier sind die Auslegungen wieder so getroffen, daß unabhängig vom Kühlwasserangebot am Zulauf 16 des Taktventils 14' stets ein konstanter Volumenstrom als Heizwasser zum Ablauf 17 und damit zum Wärmetauscher fließt.

## Patentansprüche

1. Taktventil zur diskontinuierlichen Dosierung eines Volumenstroms, insbesondere des durch einen Wärmetauscher (10) einer Kraftfahrzeugheizung fließenden Kühlwasserstroms, mit einem einen Zu- und Ablauf (16,17) aufweisenden Ventilgehäuse (15) und einem elektromagnetisch geschalteten Ventilglied (26), das die Verbindung zwischen Zu- und Ablauf (16,17) in einer ersten Schaltstellung herstellt und in einer zweiten Schaltstellung sperrt, dadurch gekennzeichnet, daß im Ventilgehäuse (15) ein von dem Zulauf (16) zu einem Rücklauf (18) führender Bypaßkanal (28) ausgebildet ist, daß im Bypaßkanal (28) ein federbelastetes, druckgesteuertes Bypaßventil (29) angeordnet ist, das so ausgelegt ist, daß bei bestehender Verbindung zwischen Zu- und Ablauf (16,17) mindestens mit Erreichen eines vorgegebenen Mindestdrucks im Bypaßkanal (28) ein vom Volumenstrom am Zulauf (16) unabhängiger, nahezu konstanter Volumenstrom zum Ablauf (17) strömt, und daß das Bypaßventil (29) so mit dem Ventilglied (26) gekoppelt ist, daß es in dessen zweiter Schaltstellung zwangsgeöffnet ist.

2. Taktventil nach Anspruch 1, dadurch gekennzeichnet, daß das Ventilglied (26) fest auf einer von einem Elektromagneten (40) betätigten Ventilstange (27) sitzt und mit einem im Ventilgehäuse (15) ausgebildeten Ventilsitz (24) mit diesem ein Sitzventil (25) bildend zusammenwirkt, daß das Bypaßventil (29) einen vom Druck im Bypaßkanal (28) und gegensinnig dazu durch eine Schließfeder (32) beaufschlagten Steuerkegel (31) aufweist und daß die Schließkraft der Schließfeder (32) und der Kegelwinkel der Druckbeaufschlagungsfläche des Steuerkegels (31) so aufeinander abgestimmt sind, daß der Ausströmquerschnitt des Bypaßventils (29) abhängig vom Druck und der Strömungsgeschwindigkeit im Bypaßkanal (28) soweit geöffnet wird, daß stets der Differenzvolumenstrom zwischen dem am Zulauf (16) anstehenden Volumenstrom und dem am Ablauf (17) abgenommenen konstanten Volumenstrom zum Rücklauf (18) abfließt.

3. Taktventil nach Anspruch 2, dadurch gekennzeichnet, daß die Schließfeder (32) als eine am Ventilgehäuse (15) und an der vom Bypaßkanal (28) abgekehrten Stirnseite des Steuerkegels (31) sich abstützende Druckfeder (35) ausgebildet ist und daß der Steuerkegel (31) axial verschieblich auf der Ventilstange (27) sitzt und von der Druckfeder (35) an eine an der Ventilstange (27) ausgebildete Ringschulter (272) angelegt wird.

4. Taktventil nach Anspruch 2, dadurch gekennzeichnet, daß der Steuerkegel (31) axial unverschieblich auf der Ventilstange (27) befestigt ist und daß die Schließfeder (32) von einer auf die Ventilstange (27) wirkenden Rückstellfeder (46) gebildet wird, die bei unerregtem Elektromagneten (40) das Ventilglied (26) des Sitzventils (25) vom Ventilsitz (24) abgehoben hält.

5. Taktventil nach Anspruch 4, dadurch gekennzeichnet, daß die Rückstellfeder (46) im Elektromagneten (40) integriert ist und sich dort als Druckfeder an einem mit der Ventilstange (27) fest verbundenen Anker (45) abstützt.

6. Taktventil nach einem der Ansprüche 3 - 5, dadurch gekennzeichnet, daß der Abstand zwischen dem auf der Ventilstange (27) fest sitzenden bzw. an der Ringschulter (272) anliegenden Steuerkegel (31) des Bypaßventils (29) und dem auf der Ventilstange (27) fest sitzenden Ventilglied (26) des Sitzventils (25) so festgelegt ist, daß der Steuerkegel (31) des Bypaßventils (29) den Bypaßkanal (28) bei vom Ventilsitz (24) maximal abgehobenem Ventilglied (26) des Sitzventils (25) schließt und bei auf dem Ventilsitz (24) aufsitzendem Ventilglied (26) des Sitzventils (25) maximal freigibt.

7. Taktventil nach einem der Ansprüche 1 - 6, dadurch gekennzeichnet, daß das Ventilgehäuse (15) einen weiteren Anschluß (19) aufweist, der über einen im Ventilgehäuse (15) ausgebildeten Rücklaufkanal (20) mit dem Rücklauf (18) verbunden ist, und daß der Bypaßkanal (28) im Rücklaufkanal (20) mündet.

8. Taktventil nach einem der Ansprüche 2 - 7, dadurch gekennzeichnet, daß im Ventilgehäuse (15) eine Ventilkammer (21) ausgebildet ist, die durch den Ventilsitz (24) des Sitzventils (25) in zwei Kammerabschnitte (211,212) unterteilt ist, und daß der Zulauf (16) über einen Zulaufkanal (22) sowie der Bypaßkanal (28) mit dem einen Kammerabschnitt (211) und der Ablauf (17) über einen Ablaufkanal (23) mit dem anderen Kammerabschnitt (212) in Verbindung steht.

## Claims

1. Cyclically operated valve for the discontinuous metering of a volume flow, in particular the flow of cooling water through a heat exchanger (10) of a motor-vehicle heating system, with a valve housing (15) having an inlet (16) and an outlet (17) and an electromagnetically operated valve member (26) which establishes the connection between the inlet (16) and the outlet (17) in a first position and locks it in a second position, characterized in that a bypass passage (28) leading from the inlet (16) to a return (18) is formed in the valve housing (15), in that a spring-loaded, pressure-controlled bypass valve (29) is arranged in the bypass passage (28), this bypass valve being designed in such a way that, given a connection between the inlet (16) and the outlet (17), a virtually constant volume flow that is independent of the volume flow at the inlet (16) flows to the outlet (17) at least when a predetermined minimum pressure is reached in the bypass passage (28), and in that the bypass valve (29) is coupled to the valve member (26) in such a way that it is forcibly held open in the second position of the latter.

2. Cyclically operated valve according to Claim 1, characterized in that the valve member (26) is seated in a fixed manner on a valve rod (27) actuated by an electromagnet (40) and interacts with a valve seat (24) formed in the valve housing (15), forming with the said valve seat a seat valve (25), in that the bypass valve (29) has a control cone (31) which is acted upon by the pressure in the bypass passage (28) and, in the opposite sense by a closing spring (32), and in that the closing force of the closing spring (32) and the angle of taper of the pressure impingement surface of the control cone (31) are matched to one another in such a way that the outflow cross-section of the bypass valve (29) is opened to such an extent, as a function of the pressure and the velocity of flow in the bypass passage (28), that the volume flow difference between the volume flow available at the inlet (16) and the constant volume flow taken off at the outlet (17) flows off to the return (18) at all times.

3. Cyclically operated valve according to Claim 2, characterized in that the closing spring (32) is designed as a compression spring (35) which is supported against the valve housing (15) and against that end of the control cone (31) which faces away from the bypass passage (28) and in that the control cone (31) is seated on the valve rod (27) in such a way that it can be displaced axially and it is pressed against an annular shoulder (272) formed on the valve rod (27) by the compression spring (35).

4. Cyclically operated valve according to Claim 2, characterized in that the control cone (31) is secured in an axially non-displaceable manner on the valve rod (27) and in that the closing spring (32) is formed by a return spring (46) which acts on the valve rod (27) and keeps the valve member (26) of the seat valve (25) raised from the valve seat (24) when the electromagnet (40) is not excited.

5. Cyclically operated valve according to Claim 4, characterized in that the return spring (46) is integrated into the electromagnet (40) and is there supported as a compression spring against an armature (45) connected in a fixed manner to the valve rod (27).

6. Cyclically operated valve according to one of Claims 3-5, characterized in that the distance between the control cone (31) of the bypass valve (29), the said control cone being seated in a fixed manner on the valve rod (27) or resting against the annular shoulder (272), and the valve member (26) of the seat valve (25), the said valve member being seated in a fixed manner on the valve rod (27), is defined such that the control cone (31) of the bypass valve (29) closes the bypass passage (28) when the valve member (26) of the seat valve (25) is raised to the maximum extent from the valve seat (24) and opens it to the maximum extent when the valve member (26) of the seat valve (25) is seated on the valve seat (24).

7. Cyclically operated valve according to one of Claims 1-6, characterized in that the valve housing (15) has a further connection (19), which is connected to the return (18) by a return passage (20) formed in the valve housing (15), and in that the bypass passage (28) opens into the return passage (20).

8. Cyclically operated valve according to one of Claims 2-7, characterized in that the valve housing (15) has formed in it a valve chamber (21) which is divided into two chamber sections (211, 212) by the valve seat (24) of the seat valve (25), and in that the inlet (16) is connected by way of an inlet passage (22) and the bypass passage (28) to one chamber section (211), and the outlet (17) is connected by way of an outlet passage (23) to the other chamber section (212).

## Revendications

1. Soupape cadencée pour le dosage discontinu d'un débit volumique notamment du débit d'eau de refroidissement traversant un échangeur de chaleur (10) d'un système de chauffage du véhicule, comprenant un boîtier de soupape (15) ayant une arrivée et une sortie (16, 17) ainsi qu'un organe d'obturation de soupape (26) à commande électromagnétique qui ouvre la communication entre l'arrivée et la sortie (16, 17) lorsqu'il occupe une première position de commutation et ferme cette liaison dans une seconde position de commutation,
caractérisée en ce que
le boîtier de soupape (15) comporte un canal de dérivation (18) reliant l'arrivée (16) à la sortie (18), ce canal de dérivation (28) ayant une soupape de dérivation (29) chargée par ressort, commandée en pression, cette soupape étant conçue pour que lorsqu'il y a communication entre l'arrivée et la sortie (16, 17), au moins lorsqu'il règne une pression minimale prédéterminée dans le canal de dérivation (28), un débit volumique constant arrive à la sortie (17) indépendamment du débit volumique à l'entrée (16) et la soupape de dérivation (29) est couplée à l'organe d'obturation (26) pour que celui-ci soit ouvert de force dans la seconde position de commutation.

2. Soupape cadencée selon la revendication 1,
caractérisée en ce que
l'organe d'obturation de soupape (26) est monté solidairement sur une tige de soupape (27) actionnée par un électroaimant (40) et coopère avec un siège de soupape (24) réalisé dans le corps de soupape (15) pour former une soupape à siège (25), la soupape de dérivation (29) ayant un cône de commande (31) sollicité par la pression régnant dans le canal de dérivation (28) et en sens opposé à l'action d'un ressort de fermeture (32) et la force de fermeture développée par le ressort de fermeture (32) et l'angle au sommet de la surface du cône de commande (31) sollicité en pression sont accordés pour que la section de passage de la soupape de dérivation (29) soit ouverte dans le canal de dérivation (28) indépendamment de la pression et de la vitesse d'écoulement et que le débit volumique de différence entre le débit volumique appliqué l'entrée (16) et le débit volumique constant pris à la sortie (17) arrive toujours au retour (18).

3. Soupape cadencée selon la revendication 2,
caractérisée en ce que
le ressort d'obturation (32) est un ressort de compression (35) qui s'appuie contre le boîtier de soupape (15) et par son côté opposé contre la face frontale en regard du cône de commande (31), non tourné vers le canal de dérivation (28), et le cône de commande (31) coulissant axialement sur la tige de soupape (27) est appliqué par un ressort de compression (35) contre un épaulement annulaire (72) réalisé sur la tige de soupape (272).

4. Soupape cadencée selon la revendication 2,
caractérisée en ce que
le cône de commande (31) est fixé solidairement axialement sur la tige de soupape (27) et le ressort d'obturation (32) est formé par un ressort de rappel (46) agissant sur la tige de soupape (27), et qui maintient l'organe d'obturation (26) soulevé par rapport à son siège (24) de la soupape à siège (25) lorsque l'électro-aimant (40) n'est pas excité.

5. Soupape cadencée selon la revendication 4,
caractérisée en ce que
le ressort de rappel (46) est intégré à l'électro-aimant (40) et s'y appuie comme ressort de compression contre un induit (45) solidaire de la tige de soupape (27).

6. Soupape cadencée selon l'une des revendications 3 à 5,
caractérisée en ce que
la distance entre le cône de commande (31) de la soupape de dérivation (29) solidaire de la tige de soupape (27) ou appliqué contre l'épaulement annulaire (272) et l'organe d'obturation (26) de la soupape à siège (25), solidaire de la tige de soupape (27) est fixée pour que le cône de commande (31) de la soupape de dérivation (29) ferme le canal de dérivation (28) lorsque l'organe d'obturation (26) de la soupape à siège (25) est soulevé au maximum par rapport au siège (24), et qu'il libère au maximum le canal de dérivation lorsque l'organe d'obturation (26) de la soupape à siège (25) est appliqué contre le siège (24).

7. Soupape cadencée selon l'une des revendications 1 à 6,
caractérisée en ce que
le boîtier de soupape (15) comporte un autre branchement (19) relié au retour (18) par un canal de retour (20) réalisé dans le boîtier de soupape (15) et le canal de dérivation (28) débouche dans le canal de retour (20).

8. Soupape cadencée selon l'une des revendications 2 à 7,
caractérisée par
une chambre de soupape (21) réalisée dans le corps de soupape (15), et subdivisée par le siège (24) de la soupape à siège (25) en deux segments de chambre (211, 212) et l'arrivée (16) est reliée par un canal d'arrivée (22) et par le canal de dérivation (28) au segment de chambre (211), la sortie (17) étant reliée à l'autre segment de chambre (212) par un canal de sortie (23).
